# EUROPEAN PATENT SPECIFICATION

(11) **EP 0 957 811 B1**
(45) Date of publication and mention of the grant of the patent: **27.10.2004**
(21) Application number: 96904373.6
(22) Date of filing: 28.02.1996
(51) Int. Cl.: A61C 8/00

(54) **DEVICE FOR ATTACHING AN ELEMENT TO A HUMAN OR ANIMAL BODY**
VORRICHTUNG ZUM BEFESTIGEN EINES ELEMENTES AN EINEM MENSCHLICHEN ODER TIERISCHEN KÖRPER
DISPOSITIF POUR LA FIXATION D'UN ELEMENT AU CORPS DE L'HOMME OU D'UN ANIMAL

(30) Priority: 28.02.1995 NL 9500393
(43) Date of publication of application: 24.11.1999
(73) Proprietor: ACCIUS B.V., 4465 BK Goes (NL)
(72) Inventor: DE NIEUPORT, Hans, Marald, NL-4625 AJ Bergen op Zoom (NL)
(74) Representative: Smulders, Theodorus A.H.J., Ir.
(86) International application number: PCT/NL1996/000094
(87) International publication number: WO 1996/026685

(56) References cited:
- EP-A- 0 136 532
- WO-A-93/20773
- DE-A- 3 300 764
- DE-U- 9 012 548
- US-A- 5 197 881

## Description

The invention relates to a device for attaching an element to a human or animal body, comprising: an implant pin to be implanted in (a bone portion of) that body, which implant pin is hollow through a part of its length; and a support member to be attached to that implant pin.

Such a device is known, for instance for attaching a tooth-replacing element to a jaw bone, and hereinafter, the invention will be specified for this use. However, it is emphasized that the invention is not limited to such use. The element mentioned can for instance serve to replace any part of a set of teeth, such as one or several molars, and can therefore have the form of a tooth, a molar, a bridge, etc. However, the element mentioned can also serve to replace any other part of the body, such as for instance a part of the face, with the implant pin being implanted in the skull.

It will be generally known that there is a need for a possibility of replacing a part of a set of teeth, such as a tooth or a molar. Hereinafter, the replacing element will also be referred to by the term artificial tooth. When a device of the above-mentioned type is used, the original tooth, should it still be present, is entirely removed, including the dental root, and the implant pin is fitted in the hole in the jaw bone where the root used to be. After the wound has healed, and bone tissue has been able to adhere to the implant pin or has even coalesced therewith, creating a rigid connection between the jaw bone and the implant pin, the support member is fitted in the hollow implant pin. For that purpose, the support member comprises a coupling post to be inserted into the hollow implant pin.

Counted from the coupling post, this support member further comprises a bridging part extending from the implant pin through the gums, and a base part being the actual support on which the artificial tooth is mounted.

The present invention is directed to the connection between the support member and the implant pin. As it is, various requirements are imposed on this connection:
- on the one hand, there should be a proper fixation, while there should be no play in the axial direction, the radial direction and the tangential direction (rotation);
- on the other hand, the support member should be capable of being fitted in a relatively simple manner and should also be capable of being removed again in a relatively simple manner;
- last but not least, the connection should be resistant to the great forces which may be developed as a result of chewing motions.

A conventional approach for connecting the support member to the implant pin is the screwed connection. The hollow implant pin is provided with an internal screw thread, and the coupling post of the support member is provided with a mating external screw thread. The fitting of the support member then takes place by screwing the coupling post into the hollow implant pin.

This conventional approach has a number of drawbacks. In the first place, the fitting operation is troublesome. When the implant is located adjacent the patient's mouth opening, the support member can still be handled relatively easily, but when the implant is located at the back of the mouth, the handling of the support member for rotating it is not very simple.

The most important drawback of a screwed connection is, however, that it tends to loosen, which may happen in particular if the connection is subjected to a strong and changing force as a result of chewing motions. Once the screwed connection has come loose, the integrity of the artificial tooth relative to the bone is lost. Not only is this an unpleasant experience to the user, but it is even possible that parts of the device are damaged beyond repair. It may be understood that the harm is incalculable if the coupling post breaks from the support member.

In practice, the risk of the screwed connection coming loose is experienced as being so serious that a different technique of attaching was introduced, viz. glueing or cementing. This technique, applied independently or in combination with a screwed connection, has indeed as an advantage that the connection between the implant pin and the support member no longer comes loose unintentionally, but has as an important drawback that the connection can no longer be detached at all, which is precisely one of the above requirements imposed on the connection. This shows that the above-mentioned risk of the screwed connection coming loose is considered to be thus serious and undesired by some experts, that, in order to solve this problem, they were prepared to make concessions in respect of the detachability. The above may illustrate that in this field of the art, avoidance of the unintentional coming loose of the connection between the support member and the implant pin has a particularly high priority.

US-5.197.881 describes a device according to the preamble of claim 1. In this known construction, the implant pin is provided with slots in its inner wall, while the coupling post of the support member is provided with a resilient leg having an outer surface which is provided with protrusions which engage into said slots. In order to assure that the protrusions stay in said slots, i.e. to secure the coupling post, a separate key must be introduced into said coupling post.

Summarizing, it can be argued that up to the present, attempts to provide a device which meets all set requirements in a satisfying manner have failed.

The object of the invention is to provide a device of the above-mentioned typé without the above-mentioned drawbacks, and to that end, the invention follows a different road in its search for a suitable connection. It was found that a particularly reliable connection which can nevertheless be fitted and detached in a simple manner, is provided if use is made of a clamped connection.

Hence, in accordance with the invention, a device for attaching an element to a body has the characterizing features of claim 1.

When the dimensions of the coupling post and the hole are properly matched, the force fit, helped by the transverse force exerted by the resilient clamping member, is sufficient to keep the support member fixed during normal loads. The fact that for instance during chewing motions, the support member will mainly be subjected to axial pressure and transverse forces, while axial tensile forces will hardly occur and will always be less than the pressure forces, plays a part in this connection. During normal use, axial tensile forces will occur only during chewing on a sticky substance such as liquorice or chewing gum, and the tensile forces caused thereby can easily be taken up through the force fit according to the invention. In this connection, it can be observed that even in the unlikely case that, during use, the coupling post is slightly pulled out of the implant through axial tensile forces, the support member is still clampingly retained and hence does not "rattle", while it is pressed into the implant again through an axial pressure force, for instance through a biting motion. This effect is achieved in particular when the coupling post is cylindrical.

On the other hand, it is possible to remove the support member from the implant through conscious exertion of a great axial tensile force by means of an instrument. This is in itself a simple operation, regardless of the location of the implant in the mouth.

In a preferred embodiment, the device comprises means for preventing a rotation of the coupling post relative to the implant pin. This preferred embodiment is then intended for application cases where great rotational forces are expected, such as in particular for artificial teeth or artificial molars supported by a single support member. However, such rotational securings are not necessary in application cases where the support member is not subjected to great rotational forces; one may think of, for instance, a bridge which is supported by several support members.

The above-mentioned rotational locking can for instance be provided by giving the coupling post and the hole in the implant pin suitable, mating transverse sections. In terms of manufacture, however, it is preferred that the coupling post and the hole in the implant pin have circular cross contours, and that separate locking members be provided.

These and other aspects, characteristics and advantages of the present invention will be explained by the following description of preferred embodiments of the device according to the invention, with reference to the accompanying drawings, wherein:
Fig. 1 is a side elevation, partly in section, of a conventional device;
Fig. 2 shows a partial longitudinal section of an exemplary embodiment of a device according to the invention;
Fig. 3A shows a partial longitudinal section of a variant of a support member according to the invention;
Fig. 3B shows a cross section of this variant taken on the line B-B in Fig. 3A, to a slightly larger scale;
Fig. 3C shows a section, comparable with Fig. 3B, of another variant;
Fig. 4A and Fig. 4B show, to an enlarged scale, a detail of structural variants of a coupling post having a clamping member according to the invention;
Fig. 5A and Fig. 5B show structural variants of a device according to the invention, comprising positioning aids;
Fig. 6 shows a preferred variant of the positioning aids of Fig. 5B;
Fig. 7 shows an alternative of the positioning aids;
Fig. 8 shows a preferred embodiment of the device according to the invention, with the implant pin comprising a clamping bush attached therein;
Fig. 9 is a perspective view of a preferred embodiment of a clamping bush;
Fig. 10 shows a cross section of the clamping bush of Fig. 9;
Fig. 11 shows a cross section, comparable with Fig. 10, of a structural variant of a clamping bush
Fig. 12 is a perspective view of another structural variant of a clamping bush;
Fig. 13 shows a cross section, comparable with Fig. 8, of a structural variant of a clamping bush, mounted in an implant post;
Fig. 14 shows a combination of a threaded implant post having a threaded clamping bush; and
Fig. 15 illustrates a variant of a device according to the invention.

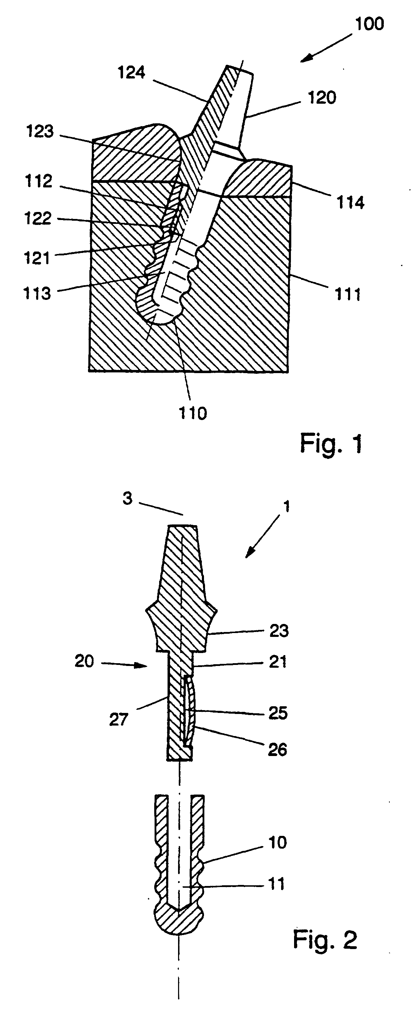

Fig. 1 shows the general construction of a known device 100 for attaching an element, such as a molar. Such a device 100 comprises a hollow implant pin 110 and a support member 120, to be attached to that implant pin. The implant pin 110 is intended to be implanted in a bone such as a jaw bone 111, and from the upper end, an axial hole 113 extends into the implant pin 110. The support member 120 comprises a coupling post 121 to be inserted into the hollow implant pin 110, a transmucosal portion 123, and a coupling pin 124 intended to be coupled to a tooth-replacing element (not shown). During use, the transmucosal portion 123 acts as a bridging part extending from the implant pin 110 through the gums 114. The coupling pin 124 is the base on which the artificial tooth is mounted.

As is mentioned hereinabove, for connecting the support member 120 to the implant pin 110, a screwed connection is conventionally used. To that end, the hollow implant pin 110 is provided with an internal screw thread 112, and the coupling post 121 of the support member 120 is provided with a mating external screw thread 122.

For a more elaborate description of a conventional device 100, reference is made to international patent application WO 92/02191. That publication also contains a description of examples of suitable materials for the support member 120 and the implant pin 110, and of a suitable external structure of the implant pin 110, the transmucosal portion 123 and the coupling pin 124. As these aspects do not constitute a subject of the present invention, and a skilled person need not have knowledge thereof for a proper understanding of the present invention, while in the device according to the present invention these aspects may be identical to those of known devices, these aspects will not be further described.

The essential details of the present invention reside in the connection between the coupling post 121 and the interior of the implant pin 110, which connection according to the inventive concept is a clamped connection. Hence, hereinafter, only those two components will be discussed, and identical or comparable components will be designated by identical reference numerals.

Fig. 2 shows an embodiment of the device 1 according to the present invention, wherein the implant pin 10 is provided with a cylindrical hole 11 and wherein the coupling post 21 of the support member 20 has a cylindrical contour fitting in that hole 11. Within the framework of the present invention, by the expression "cylindrical" is meant that the wall portions are always directed parallel to a body axis 3. Accordingly, the walls of the hole 11 and of the coupling post 21 are described by displacing a cross section, taken at a random position, parallel to that axis 3. From a point of view of manufacture, it is preferred that this cross section be circular: in that case, the hole 11 can be manufactured as a bore. The internal diameter Dᵢ of the bore 11 and the external diameter Dᵤ of the coupling post 21 are chosen in relation to each other for providing a force fit. More in particular, the relation Dᵤ - 300 µm ≤ Dᵢ ≤ Dᵤ + 35 µm preferably applies. In general, Dᵤ will be in the range of about 1 mm to about 6 mm.

Mounted in a recess 25 of the coupling post 21 is a resilient clamping member 26. In the embodiment of Fig. 2, the resilient clamping member 26 has the form of a leaf spring, and extends in the longitudinal direction of the coupling post 21. The length of the leaf spring 26 is slightly greater than the axial dimension of the recess 25.

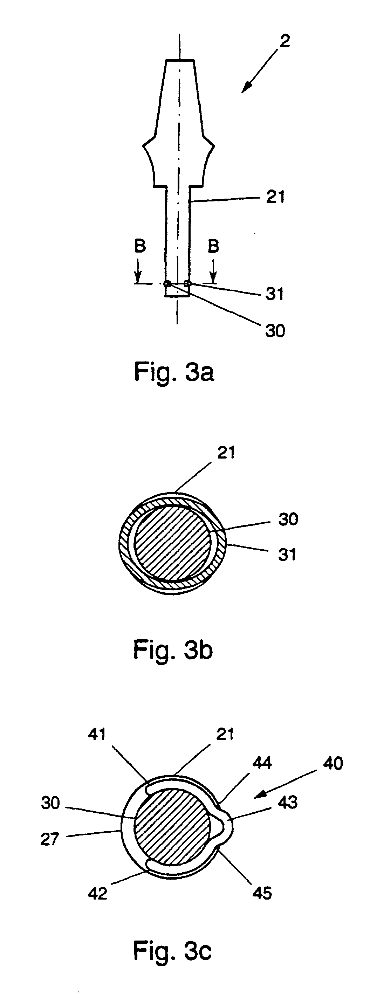

Device 2 as illustrated in Figs. 3A-B is a variant of the embodiment shown in Fig. 2, the coupling post 21 having a circumferential groove 30 and a clamping member in the form of an elliptic annular spring 31 being disposed in that groove 30.

During insertion of the coupling post 21 into the bore 11 of the implant pin 10, the clamping member 26 or 31 will be depressed by the wall of the bore 11 so as to be elastically deformed. Thus, a substantial mutual clamping force will be created between the implant pin 10 and the coupling post 21. In this connection, it is preferred that the clamping member operates one-sidedly, because in that case, the surface portion 27 of the coupling post 21 located opposite the clamping member is pressed against the inner wall of the bore 11 and friction can thus be created over a large part of the surface. For producing a proper clamping force, it may be desired that the outside surface of the coupling post 21 and/or the inside surface of the bore 11 is slightly roughened, for instance through a brief treatment with an etching agent.

Fig. 3C illustrates that as a variant, the elliptic annular spring 31 can be replaced by a semicircular annular spring 40. This semicircular annular spring 40 comprises two legs 41, 42 whose curvature corresponds to the radius of the circumferential groove 30, and which legs 41, 42 meet at a central portion 43 of a smaller curvature, which central portion 43 projects outside the groove 30. From this central portion 43, the legs 41 and 42 each extend into the groove 30 over slightly more than 90°, so that it is on the one hand provided that the semicircular annular spring 40 cannot fall from the groove 30 unintentionally, while on the other hand, the semicircular annular spring 40 can easily be fitted in the groove 30. When the coupling post 21 having this semicircular annular spring 40 is inserted into the bore 11, the spring 40 is depressed at its central portion 43, causing the spring 40 to press against the coupling post 21 by intermediate portions 44 and 45, so that the wall portion 27 of the coupling post 21 located opposite the central portion 43 is pressed firmly against the corresponding wall portion of the bore 11.

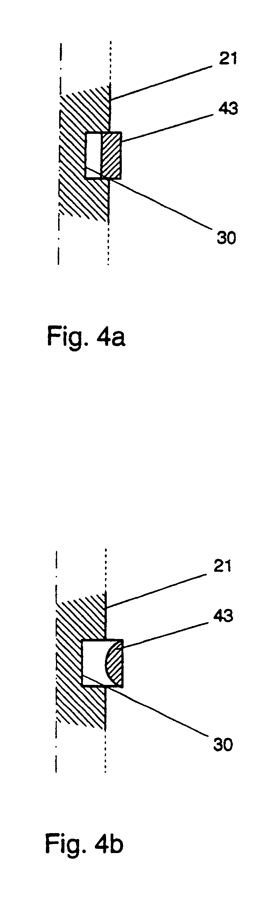

In connection with the force fit of the coupling post 21 in the bore 11, a proper clamping action is provided between the coupling post 21 and the implant pin 10 by the examples of clamping members discussed. Because of that clamping action, the coupling post 21 provides a good friction-induced resistance to axial displacement and to tangential displacement (rotation). Experiments have demonstrated that of the examples discussed, the type with the axial leaf spring 26 of Fig. 2 provides a better resistance to tangential displacement, whereas the type with the annular spring 40 of Fig. 3C provides a better resistance to axial displacement. This effect is attributed to a resistance, exerted by the spring member itself, to displacement in a direction transverse to its longitudinal direction. Within the framework of the inventive concept, this effect can be augmented through a suitable choice of the cross section of the spring member, as is illustrated in Figs. 4A-B. Hence, instead of a round cross section (Fig. 3A), preferably the spring member has a section of which the contour is flat on the outside. Figs. 4A and 4B illustrate examples hereof. Similarly, the leaf spring 26 of the device 1 illustrated in Fig. 2 can be flat on the outside.

within the framework of the inventive concept, it is possible to combine the advantages of the two structural variants by providing the coupling post 21 with both an axial leaf spring 26 and an annular spring 31 or 40, if there is sufficient space therefor.

With the embodiments described hereinabove, a clamping action is generally provided which is thus efficient that the resistance to axial and tangential displacement is sufficient for some applications. However, when the coupling post 21 is fitted in the bore 11 by means of an axial displacement (pressing down), the tangential orientation of the coupling post 21 relative to the bore 11, i.e. the rotational position in respect of the center line of the bore 11, is still entirely free. On the other hand, in many application cases it is desired that this position accurately and reproducibly corresponds to a predetermined position. Examples thereof are devices wherein the support member 20 has a ball joint made of memory material, as described in the above-mentioned international patent application WO 92/02191. Hence, in such cases there is a need for a positioning aid. There are also cases where there is a need for an absolute securing against rotation.

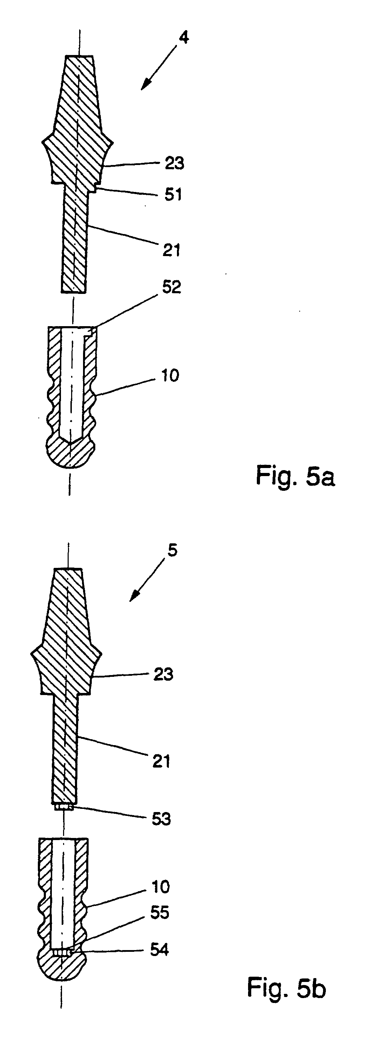

Figs. 5A and 5B show examples of devices comprising positioning aids 50. For the sake of simplicity, the clamping means are not shown in these Figures. In the device 4 illustrated in Fig. 5A, those positioning aids 50 are formed by a projection 51 which is formed on the coupling post 21 adjacent the transmucosal portion 23 and which cooperates with a recess 52 in the implant pin 10. In the variant 5 illustrated in Fig. 5B, those positioning aids 50 are formed by a profiled extension piece 53 which is formed at the extremity of the coupling post 21 and which cooperates with a correspondingly profiled recess 54 in the bottom 55 of the implant pin 10. In principle, any non-round contour will offer the desired result, but from a point of view of manufacture, a polygonal cross section such as a hexagon is to be preferred.

It will be understood that once the coupling post 21 has been fitted properly in the implant pin 10, a rotation of the coupling post 21 relative to the implant pin 10 is disabled by such positioning aids 50. However, the structural variants described of the positioning aids are not optimal in the sense that during insertion of the coupling post 21 into the implant pin 10, no help is offered for finding the proper rotational position. If at the end of the inserting operation the orientation chosen proves not to be entirely correct, then that orientation should be corrected by rotating the coupling post 21 relative to the implant pin 10, which, however, is particularly troublesome because of the strong clamping action (which is precisely aimed at, within the framework of the present invention) between the coupling post 21 and the implant pin 10.

Hence, according to the invention, a variant is preferred wherein, during insertion of the coupling post 21 into the implant pin 10, the positioning aids 50 engage prior to the coupling post 21 in the implant pin 10 experiencing a clamping action. For that purpose, the positioning aids 50 can be designed to engage before the coupling post 21 enters the implant pin 10, but it suffices when the positioning aids 50 are designed to engage pior to the clamping means (26; 31; 40) coming into action.

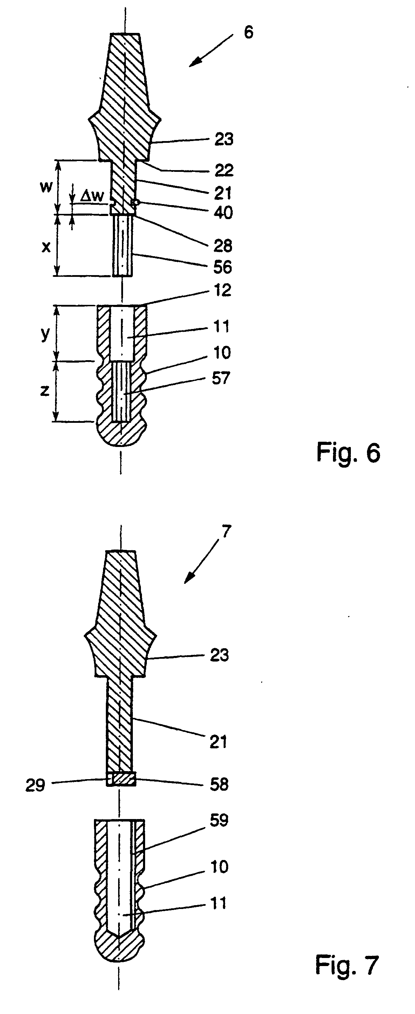

An example of such a preferred variant is illustrated in Fig. 6. This preferred variant 6 is comparable with that of Fig. 5B, with the understanding that the profiled extension piece 56 formed at the extremity of the coupling post 21 is longer, and that the correspondingly profiled recess 57 in the implant pin 10 is deeper. More in particular, in this preferred variant it applies that the length x of the profiled extension piece 56 is not less than the length y of the bore 11 in the implant pin 10.

In this connection, it is observed that the length w of the coupling post 21 is not greater than y, to ensure that no slit remains between the upper edge 12 of the implant pin 10 and the lower edge 22 of the transmucosal portion 23 of the support member 20. It is further observed that the depth z of the recess 57 corresponding to the extension piece 56 meets the formula y + z ≥ w + x, to ensure that the extension piece 56 does not touch the bottom of the recess 57 prior to the lower edge 22 of the transmucosal portion 23 of the support member 20 touching the upper edge 12 of the implant pin 10.

For the sake of completeness, it is observed that although the dimensional requirement x ≥ y is preferred, there is still some tolerance. By way of example, in Fig. 6 the clamping member 40 of Fig. 3C is drawn in, at a distance Δw from the lower end 28 of the coupling post 21. It will be understood that if the fit of the coupling post 21 in the bore 11 of the implant pin 10 in itself allows a rotation, then a rotation of the coupling post 21 relative to the implant pin 10 is still possible if the coupling post 21 is inserted no further than Δw into the bore 11 of the implant pin 10, because only then does the clamping member 40 engage. In that case, it may be sufficient if the requirement x + Δw ≥ y is met.

Finally, in this connection, it is observed that the fit of the positioning aids 50 need not be an accurate force fit, but that a certain play is allowed. In this respect, three aspects play a part:
1) the smaller the tolerance required, the more expensive the manufacture;
2) no accurate fit is required for preventing rotation, while for positioning in a reliable and secure manner, a slight deviation of some degrees is allowed;
3) if the positioning aids 50 fit accurately, this imposes very high demands on the accuracy with which the extension piece 56 should be oriented relative to the coupling post 21 and on the accuracy with which the corresponding recess 57 should be oriented relative to the bore 11 in the implant pin 10. The slightest deviation may then mean that the coupling post 21 no longer fits properly, without wringing, in the implant pin 10.
For that reason, in practice, a play of some percents can be used for the positioning aids 50.

In practice, the positioning aids 56, 57 of the device 6 illustrated in Fig. 6 prove to be satisfactory. However, it is conceivable that in some practical situations the required length of the implant pin 10 - greater than y + z - is experienced as undesired. Fig. 7 shows a structural variant 7 where such an extra depth is superfluous. The coupling post 21 has its extremity provided with a radially protruding projection 58, and the bore 11 in the implant pin 10 is provided with a longitudinally extending groove 59 in which the projection 58 fits. In this case, the coupling post 21 cannot be pressed into the implant pin 10 until the post 21 has the proper orientation relative to the implant pin 10, i.e. not until the radial projection 58 is aligned with the groove 59.

The radial projection 58 can be made in a simple manner by providing a transverse groove 29 in the extremity of the coupling post 21, for instance through sawing, and attaching a projection pin 58 in that transverse groove 29, for instance through glueing or welding.

Alternatively, for instance when the clamping member 26 of the device 1 illustrated in Fig. 2 is used, the clamping member can also act as projection 58 so as to provide, in cooperation with the groove 59, a locking against rotation.

The longitudinal groove 59 can be made by slotting a groove in the wall of the bore 11. From a point of view of manufacture, it is preferred to provide two grooves 59 radially opposite each other.

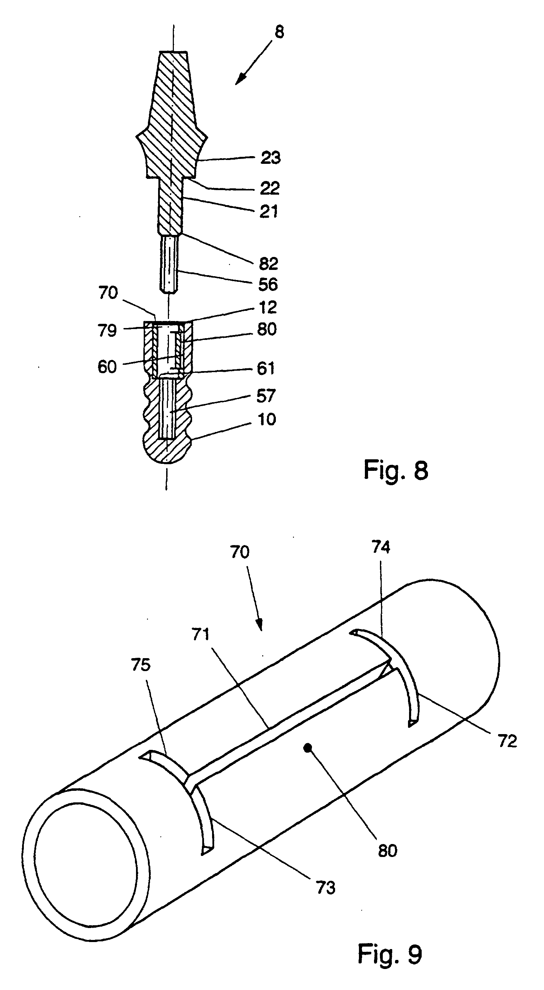

In the exemplary embodiments described hereinabove, the clamping means are in each case part of the coupling post 21. Alternatively, the clamping means may also be part of the implant pin 10. A preferred embodiment of such alternative device 8 is illustrated in Fig. 8.

The implant pin 10 is provided with a bore 60 having a bottom 61. Arranged in this bore 60 is a clamping bush 70. The bore 60 has a length not less than the length of the clamping bush 70, to ensure that in inserted condition, the clamping bush 70 does not project above the upper edge 12 of the implant pin 10. The support member 20 has a coupling post 21 of a diameter corresponding with the inside diameter of the clamping bush 70, so that the coupling post 21 in the clamping bush 70 has a force fit. The length of the coupling post 21 is not greater than the length of the bore 60.

The coupling post 21 has its extremity provided with a profiled extension piece 56, and provided in the bottom 61 of the bore 60 of the implant pin 10 is a correspondingly profiled recess 57 whose function is described with reference to Fig. 6.

The clamping bush 70 is unremovably fixed relative to the implant pin 10. A possible manner of establishing this is to glue or weld the clamping bush 70 to the implant pin 10. Preferably, however, the clamping bush 70 has a press fit in the bore 60 of the implant pin 10, and the clamping bush 70 is inserted into that bore 60 through a pressing operation. In this connection, it is preferred that the material of the clamping bush 70 be relatively soft.

The clamping bush 70 has clamping fins. For that purpose, before the clamping bush 70 is pressed into the bore 60 of the implant pin 10, a longitudinal groove 71 is provided in the wall of the clamping bush 70, the length of which longitudinal groove is less than the length of the clamping bush 70, and starting from that groove 71, two tangential grooves 72, 73 are provided, having a length less than 180° and preferably in the range of from 30° to 90°. In this manner, a segment of a cylinder 80 is defined by the three grooves 71, 72, 73, which segment of a cylinder will, within the framework of the present application, also be referred to by the term fin.

In the preferred embodiment illustrated, two further tangential grooves 74, 75 are provided so as to be in line with the two above-mentioned tangential grooves 72, 73, and also starting from the above-mentioned longitudinal groove 71, so that all those grooves 71-75 together have the shape of a letter H and define two fins 80.

The provision of those grooves 71-75 can for instance take place by means of a cutting operation such as sawing or milling, or by an eroding operation such as burning away by means of a laser beam.

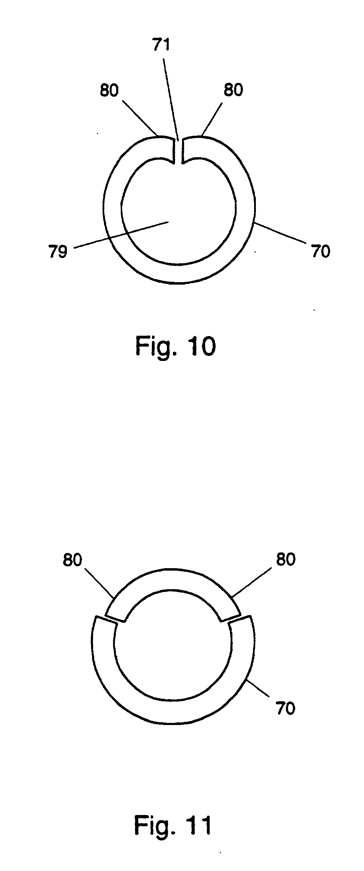

After the provision of those grooves 71-75, each fin 80 formed is slightly pressed inwards radially, causing it to pivot over an imaginary line connecting the outer ends of the tangential grooves 72, 73, as is indicated in dotted lines in Fig. 9. Thus, the clamping bush 70 is slightly plastically deformed along this connecting line, so that, when the depression force is removed, the fins 80 will assume a slightly inwardly directed postion relative to the original contour line of the clamping bush 70, as is shown exaggeratedly in Fig. 10.

During insertion of the coupling post 21 into the hole 79 defined by the inner wall of the clamping bush 70, the fins 80 are pressed outwards, so that they will come to lie along the original contour line of the clamping bush 70 again. To facilitate the pressing outwards of the fins 80, the coupling post 21 preferably has its end provided with a tapered portion 82.

Because of the elastic deformation which occurs, the fins 80 will now exert a clamping force on the inserted coupling post 21. A particularly suitable material for the clamping bush 70 is nitinol, on account of the properties of particularly good elasticity and good biocompatibility.

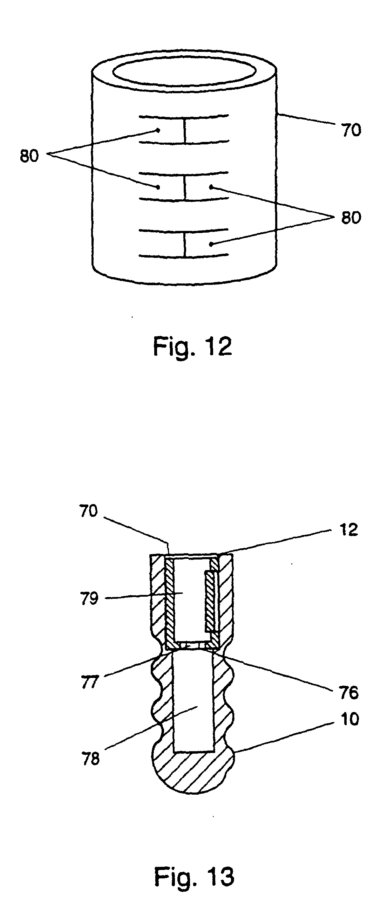

As an alternative to the embodiment shown, it is possible that the clamping bush has only one fin. Fig. 11 illustrates a structural variant wherein the fins 80 are directed away from each other, rather than towards each other, such as in the embodiment of Fig. 10. Fig. 12 illustrates a structural variant wherein several separate fins 80 are provided along the length of the clamping bush 70. It will be understood by anyone skilled in the art that still other variants are possible.

In this embodiment, the coupling post 21 can have a smooth surface. To increase the clamping action, it is possible that the outside surface of the coupling post 21 and/or the inside surface of the clamping bush 70 is roughened somewhat, for instance through a brief treatment with an etching agent. The tolerance in the diameter of the coupling post 21 can be about -35 µm and +300 µm, starting from the inside diameter of the clamping bush 70.

Because of the force fit of the coupling post 21 in the bore 11 or the clamping bush 70 respectively, a particular amount of air may become trapped upon insertion of the coupling post 21 into the implant pin 10. The pressure hereof will increase as the trapped volume becomes smaller and smaller, so that it is even possible that the coupling post is pressed outwards again. To prevent this, the surface of the coupling post 21 is preferably provided with at least one vent groove, which is not shown in the Figures for simplicity's sake. For the same reason, it is advisable that the outer surface of the positioning means (projection 56) be provided with at least one vent groove.

Fig. 13 illustrates a variant of the implant pin 10 illustrated in Fig. 8, wherein the clamping bush 70 is provided with a bottom 76 resting on the bottom 61 of the bore 60. Provided in the bottom 76 of the clamping bush 70 is a profiled hole 77 whose section corresponds with the section of the extension piece 56 of the coupling post 21 to be fitted, and whose function is equal to that of the recess 57 discussed hereinabove. Instead of that profiled recess 57, the implant pin 10 in the variant illustrated in Fig. 13 is provided with a simple round bore 78 for receiving that part of the extension piece 56 which will extend through the bottom 76 of the clamping bush 70.

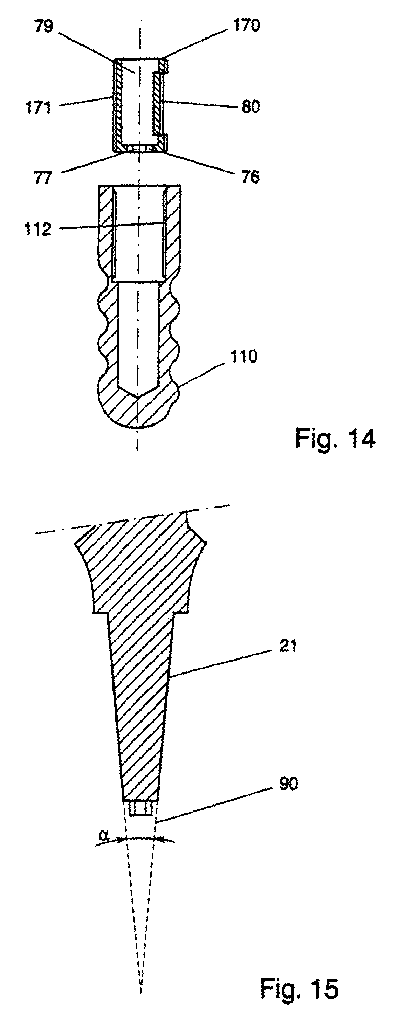

Fig. 14 illustrates that within the framework of the present inventive concept it is also possible to mount the clamping bush in an implant pin in a manner other than through a press fit, viz. by means of, for instance, screw thread. In this manner, in accordance with the invention, it is possible to make a conventional implant pin 110, as illustrated in Fig. 1, suitable for use as implant pin 10 in a device according to the present invention. This may be important in the case where, in a pin 110 which is already implanted, the support member 120 screwed therein proves to come loose. It may be understood that modification of the implant pin 110 already implanted is by far preferable to extraction of this implant pin 110 and replacement by a new implant pin 10.

In accordance with a further aspect of the present invention, this is enabled by a clamping bush 170 shown in Fig. 14, whose outer surface is provided with an external screw thread 171 mating with the internal screw thread 112 of the implant pin 110. For the rest, the clamping bush 170 may be identical to the clamping bush 70 as discussed hereinabove with reference to Figs. 8-12. Preferably however, and as is illustrated, the clamping bush 170 has a bottom 76 wherein a profiled hole 77 is provided, as is discussed with reference to Fig. 13, because this simplifies the insertion of the clamping bush 170 into the implant pin 110. In this connection, it is advantageous if the extension piece 56 of the support member 20 has a hexagonal section, because in that case, the hole 77 can have a hexagonal section, permitting the insertion of the clamping bush 170 into the implant pin 110 to be carried out with a socket head wrench.

Instead of a press fit, as discussed in respect of the clamping bush 70, the clamping bush 170 has a screw fit in the implant pin 110, and the insertion of the clamping bush 170 takes place through screwing it into the implant pin 110. The loosening of this screwed connection can be avoided in a simple manner and without detracting from the efficiency of the device, by providing the clamping bush 170, when it is being screwed in, with a slight amount of adhesive, as a result of which the clamping bush 170, after having been screwed in, is fixed relative to the implant pin 110 because of the adhesive and can be considered to form one whole therewith.

In Fig. 14, the screw thread 171 is shown along the entire length of the clamping bush 170. However, in practice, it may be sufficient if the clamping bush 170 has only a portion of its length provided with screw thread, for instance twice the pitch of the screw thread. For the sake of convenience, that screw thread portion may be located adjacent the top side of the clamping bush, because the lower part of the clamping bush can then act as centring member during the insertion, while, moreover, the number of revolutions needed for screwing down is reduced.

The use of a clamping bush as illustrated in Figs. 9 and 10 has already proved its worth in practice, although in a entirely different field of technology. As it is, for clamping a dental instrument such as a drill bit in an instrument holder, there is a system utilizing such a clamping principle. In this application, too, the clamping bush provides a proper tangential and axial fixation which is resistant to the changing forces occurring during the use of a drill, while through the exertion of an axial force, the drill bit can be inserted or removed respectively. It has been the present inventor's merit that in his search for a solution to the above-mentioned problems regarding the attachment of a support member in an implant pin, he departed from the smoothed paths and realized that this clamping principle, which is known for an instrument, can be used with particularly great advantage for connecting a dental replacement element to a pin implanted in the bone.

Hereinabove, embodiments are described wherein the coupling post 21 always has a cylindrical and preferably circular form, just like the hole 11; 79 corresponding therewith. However, the invention also provides a variant wherein the coupling post 21 has a slight taper, as is illustrated in Fig. 15. The outside surface of the coupling post 21 is described by a cone 90 (indicated in dotted lines in Fig. 15) having an apex angle α which preferably lies in the range of from 0° to 5°. The inside of the hole 11; 79 has a corresponding taper.

Such a construction, too, offers a good clamping action once the coupling post 21 is pressed home. Compared with the construction with a cylindrical coupling post 21 as described hereinabove, it is an advantage that the clamping action only occurs when the conical coupling post 21 has been introduced into the hole 11; 79 through a relatively large distance, so that a rotation of the support member 20 is still possible through a relatively large distance of the insertion path, and the length of the positioning aids 53, 54; 56, 57 can be relatively slight, as is illustrated in Fig. 15.

It will be understood by anyone skilled in the art that it is possible to alter or modify the embodiment shown of the device according to the invention without departing from the scope of the invention as described in the claims.

For instance, it is possible that the coupling post 21 comprises several clamping members 26 and/or 31.

It is also possible that the positioning aids are provided in that the coupling post has a non-round section throughout its length, with the recess in the implant pin having a corresponding section.

As an alternative to the elastic fins 80, a clamping bush 70 may be provided with at least one slight deformation in the form of an inwardly facing dent, for instance by giving a blow on the outside with a hammer.

With regard to the device 8 described in Fig. 8, the length of the coupling post 21 is preferably less than the length of the coupling bush 70. However, it is possible to choose the length of the coupling bush 70 to be less, if a chamber is recessed in the bottom 61 of the bore 60 in the implant pin 60, in which chamber the extremity of the coupling post 21 which, in the mounted condition, projects through the coupling bush 70, can be received.

## Claims

1. A device for attaching an element to a human or animal body, comprising:
an implant pin (10) which is to be implanted in (a bone portion of) said body and which is hollow through a part of its length; and a support member (20) to be attached to said implant pin (10); wherein the implant pin (10) is provided with a hole (11; 79), and wherein the support member (20) comprises a coupling post (21) which is to be introduced into said hole (11; 79);
**characterized in:**
**that** the coupling post (21) of the support member (20) fits tightly in the hole (11; 79) of the implant pin (10), and that a resilient clamping member (26; 31; 40; 80) is provided which, when the coupling post (21) has been inserted into the hole (11; 79) of the implant pin (10), exerts a mutual clamping force on said post (21) and said pin (10).

2. A device according to claim 1, wherein the hole (11) is a cylindrical hole (11) preferably having a circular cross section, and wherein the coupling post (21) is a cylindrical coupling post (21) having a matching contour.

3. A device according to claim 1 or 2, wherein the resilient clamping member (26) has the form of a leaf spring, extending in the longitudinal direction of the coupling post (21) in a recess (25) in said coupling post (21).

4. A device according to claim 1 or 2, wherein the resilient clamping member (31) has the form of an elliptic annular spring disposed in a circumferential groove (30) in the coupling post (21).

5. A device according to claim 1 or 2, wherein the resilient clamping member (40) has the form of a semicircular annular spring disposed in a circumferential groove (30) in the coupling post (21).

6. A device according to any one of claims 3-5, wherein the resilient clamping member (26; 31; 40) has a sectional contour which is flat on the outside.

7. A device according to claim 1 or 2, wherein a clamping bush (70; 170) is arranged in the implant pin (10);
wherein said hole (79) is defined by the inner wall of the clamping bush (70; 170);
and wherein the resilient clamping member (80) is formed on said clamping bush (70; 170).

8. A device according to claim 7, wherein the resilient clamping member (80) is formed by at least one fin which is slightly bent inwards and which is defined by grooves (71, 72, 73) in the clamping bush (70).

9. A device according to claim 8, wherein two fins (80), directed towards each other, are present in the clamping bush (70).

10. A device according to any one of claims 7-9, wherein the clamping bush (7) is mounted, by means of a press fit, in a bore (60) in the implant pin (10).

11. A device according to any one of claims 7-9, wherein the clamping bush (170) is provided with an external screw thread (171), wherein the implant pin (10; 110) is provided with an internal screw thread (12), and wherein the clamping bush (170) is screwed into the implant pin (10; 110) and preferably fixed by means of adhesive.

12. A device according to any one of the preceding claims, wherein positioning aids (50) are provided.

13. A device according to claim 12, wherein the positioning aids (50) comprise a projection (51) formed on the coupling post (21) and a recess (52) on the implant pin (10), which recess (52) cooperates with said projection (51).

14. A device according to claim 12, wherein the positioning aids (50) comprise a profiled extension piece (53; 56) formed on the coupling post (21) and a correspondingly profiled recess (54; 57) in the bottom (55) of the implant pin (10), which recess (54; 57) cooperates with said extension piece (53; 56).

15. A device according to any one of claims 7-11;
wherein the clamping bush (70; 170) is provided with a bottom (76);
and wherein positioning aids (50) are provided, comprising a profiled extension piece (53; 56) formed on the coupling post (21) and a hole (77) formed in the bottom (76) of the clamping bush (70; 170), said hole (77) having a corresponding profile.

16. A device according to claim 14 or 15, wherein the extension piece (56) has a length such that upon insertion of the post (21) into the implant pin (10), the extension piece (56) engages the corresponding hole (57; 77) prior to the clamping means (26; 31; 40; 80) coming into action.

17. A device according to any one of the preceding claims, wherein a vent groove is provided for causing air to escape upon insertion of the coupling post (21) of the support member (20) into the implant pin (10).

18. A device according to any one of the preceding claims, wherein the coupling post (21) is conical and is described by a cone (90) having an apex angle α preferably in the range of from 0° to 5°, and wherein the hole (11; 79) has a corresponding conicity.

19. An implant pin (10) of a device according to any one of claims 1-18, the implant pin (10) having a hole (11; 79) into which the coupling post (21) of a support member (20) fits tightly such that said coupling post can clampingly be received, further comprising a clamping bush (70; 170), which clamping bush comprises spring means (80).

20. An implant pin according to claim 19, wherein a profiled recess (54; 57; 77) is provided for receiving a profiled extension piece (53; 56) of a support member (20).

21. A method for modifying a conventional implant pin (110) having internal screw thread (112), wherein a clamping bush (170) having external screw thread (171), a cylindrical or slightly conical hole (79), and a resilient clamping member (80), is screwed into said internal screw thread (112) of the implant pin (110) and is preferably glued therein.

22. A clamping bush (70; 170) for a dental implant, intended for use in a method according to claim 21, the clamping bush (70; 170) comprising external screw thread (171), a cylindrical or slightly conical hole (79), and a resilient clamping member (80).

23. A clamping bush (70; 170) according to claim 22, provided with a bottom (76) having a profiled hole (77).

## Patentansprüche

1. Vorrichtung zum Anbringen eines Elements an einem menschlichen oder tierischen Körper, aufweisend:
einen implantat-Stift (10), welcher in den Körper (bzw. einer Knochenpartie davon) einzusetzen ist, und welcher über einen Teil seiner Länge hohl ist; und ein am lmplatat-Stift (10) anzubringendes Halterungsteil (20); wobei der implantat-Stift (10) mit einem Loch (11; 79) versehen ist, und wobei das Halterungsteil (20) einen Verbindungsschaft (21) aufweist, welcher in das Loch (11, 79) einzuführen ist;
**dadurch gekennzeichnet,**
**daß** der Verbindungsschaft (21 ) des Halterungsteils (20) eng in das Loch (11, 79) des Implantat-Stifts (10) paßt, und daß ein elastisches Klemmteil (26; 31; 40; 80) vorgesehen ist, welches, wenn der Verbindungsschaft (21) in das Loch (11; 79) des Implantat-Stifts (10) eingeführt worden ist, eine gegenseitige Klemmkraft auf den Verbindungsschaft (2 1 ) und den Stift (10) ausübt.

2. Vorrichtung gemäß Anspruch 1, wobei das Loch (11) ein zylindrisches Loch (11) ist, welches vorzugsweise einen kreisförmigen Querschnitt aufweist, und wobei der Verbindungsschaft (21) ein zylindrischer Verbindungsschaft (21) mit einer passenden Kontur ist.

3. Vorrichtung gemäß Anspruch 1 oder 2, wobei das elastische Klemmteil (26) die Form einer Blattfeder besitzt, welche sich in fongitudinaler Richtung des Verbindungsschafts (21) in einer Vertiefung (25) des Verbindungsschafts (21) erstreckt.

4. Vorrichtung gemäß Anspruch 1 oder 2, wobei das elastische Klemmteil (31) die Form einer elliptischen Ringfeder besitzt, welche in einer umlaufenden Nut (30) in dem Verbindungsschaft (21 ) angeordnet ist.

5. Vorrichtung gemäß Anspruch 1 oder 2, wobei das elastische Klemmteil (40) die Form einer Teilkreis-Ringfeder besitzt, welche in einer umlaufenden Nut (30) in dem Verbindungsschaft (21) angeordnet ist.

6. Vorrichtung gemäß einem der Ansprüche 3-5, wobei das elastische Klemmteil (26; 31; 40) eine Querschnittskontur besitzt, welche flach an der Außenseite ist.

7. Vorrichtung gemäß Anspruch 1 oder 2, wobei eine Klemmhülse (70; 170) in dem implantat-Stift (19) angeordnet ist;
wobei das Loch (79) als innere Wand der Klemmhülse (70; 170) vorgegeben ist;
und wobei das elastische Klemmteil (80) auf der Klemmhülse (70; 170) ausgebildet ist.

8. Vorrichtung gemäß Anspruch 7, wobei das elastische Klemmteil (80) von wenigstens einer Rippe gebildet wird, welche leicht nach innen gebogen ist und welche durch Schlitze (71, 72, 73) in der Klemmhülse (70) vorgegeben ist.

9. Vorrichtung gemäß Anspruch 8, wobei zwei zueinander weisende Rippen (80) in der Klemmhülse (70) vorhanden sind.

10. Vorrichtung gemäß einem der Ansprüche 7-9, wobei die Klemmhülse (70) mittels einer Preßpassung in einer Bohrung (60) des Implantat-Stifts (10) befestigt ist.

11. Vorrichtung gemäß einem der Ansprüche 7-9, wobei die Klemmhülse (70) mit einem äußeren Schraubengewinde (171) versehen ist, wobei der Implantat-Stift (10; 110) mit einem inneren Schraubengewinde ((12) versehen ist, und wobei die Klemmhülse (70) in den Implantat-Stift (10; 110) eingeschraubt und vorzugsweise mit Klebstoff fixiert ist.

12. Vorrichtung gemäß einem der vorangehenden Ansprüche, wobei Ausrichtehilfen (50) vorgesehen sind.

13. Vorrichtung gemäß Anspruch 12, wobei die Ausrichtehilfen (50) einen auf dem Verbindungsschaft (21) ausgebildeten Vorsprung (51) und eine Aussparung (52) auf dem Implantat-Stift (10) umfassen, welche mit dem Vorsprung (51) zusammenwirkt.

14. Vorrichtung gemäß Anspruch 12, wobei die Ausrichtehilfen (50) ein auf dem Verbindungsschaft (21) ausgebildetes profiliertes Fortsetzungsstück (53; 56) und eine entsprechend profilierte Aussparung (54; 57) im Boden (55) des implantat-Stifts (10) umfassen, welche mit dem Fortsetzungsstück (53; 56) zusammenwirkt.

15. Vorrichtung gemäß einem der Ansprüche 7-11, wobei die Klemmhülse (70; 170) mit einem Boden (76) versehen ist; und wobei Ausrichtehilfen (50) vorgesehen sind, welche ein auf dem Verbindungsschaft (21) ausgebildetes profiliertes Fortsetzungsstück (53; 56) und ein im Boden (76) der Klemmhülse (70; 170) ausgebildetes Loch (77) umfassen, welches ein entsprechendes Profil aufweist.

16. Vorrichtung gemäß Anspruch 14 oder 15, wobei das Fortsetzungsstück (56) eine so gewählte Länge besitzt, daß bei Einführen des Schafts (21) in den Implantat-Stift (10) das Fortsetzungsstück (56) in das entsprechende Loch (57; 77) eingreift, bevor die Klemm-Mittel (26; 31; 40; 80) wirken.

17. Vorrichtung gemäß einem der vorangehenden Ansprüche, wobei ein Belüftungsschlitz vorgesehen ist, um Luft beim Einführen des Verbindungsschafts (21) des Halterungsteils (20) in den Implantat-Stift (10) dazu zu veranlassen, zu entweichen.

18. Vorrichtung gemäß einem der vorangehenden Ansprüche, wobei der Verbindungsschaft (21) konisch ist und beschrieben ist durch einen Konus (90) mit einem Öffnungswinkel α vorzugsweise im Bereich von 0° bis 5°, und wobei das Loch (11, 79) eine entsprechende Konizität besitzt.

19. Implantat-Stift (10) einer Vorrichtung gemäß einem der Ansprüche 1-18, wobei der Implantat-Stift (10) ein Loch (11; 79) besitzt, in welches der Verbindungsschaft (21) eines Halterungsteils (20) eng paßt, so daß der Verbindungsschaft (21) klemmend aufgenommen werden kann, und ferner eine Klemmhülse (70; 170) aufweist, welche Federmittel (80) aufweist.

20. Implantat-Stift (10) gemäß Anspruch 19, wobei eine profilierte Aussparung (54; 57; 77) zum Aufnehmen eines profilierten Fortsetzungsstücks (53; 56) eines Halterungsteils (20) vorgesehen ist.

21. Verfahren zum Modifizieren eines herkömmlichen Implantat-Stifts (110) mit einem inneren Schraubengewinde (112), wobei eine Klemmhülse (170), welche ein äußeres Schraubengewinde (171), ein zylindrisches oder leicht konisches Loch (79) und ein elastisches Klemmteil (80) besitzt, in das innere Schraubengewinde (112) des Implantat-Stifts (110) eingeschraubt und vorzugsweise eingeklebt wird.

22. Klemmhülse (70; 170) für ein zahnmedizinisches Implantat, vorgesehen für die Benutzung in einem Verfahren gemäß Anspruch 21, wobei die Klemmhülse (70; 170) ein äußeres Schraubengewinde (171), ein zylindrisches oder leicht konisches Loch (79) und ein elastisches Klemmteil (80) aufweist.

23. Klemmhülse (70; 170) gemäß Anspruch 22, versehen mit einem Boden (76), weicher ein profiliertes Loch (77) aufweist.

## Revendications

1. Un dispositif pour attacher un élément à un corps humain ou animal comprenant:
une broche d'implant (10), creuse sur au moins une partie de sa longueur, destinée à être implantée dans (une partie osseuse du)dit corps; et un organe support (20) destiné à être attaché à la dite broche d'implant (10); la broche d'implant (10) étant pourvue d'un orifice (11; 79) et l'organe support (20) comprenant un téton de couplage (21) destiné à être introduit dans ledit orifice (11; 79);
**caractérisé:**
- **en ce que** le téton de couplage (21) de l'organe de support (20) s'adapte étroitement à l'orifice (11; 79) de la broche d'implant (10),
- et **en ce qu'**est prévu un organe de serrage résilient (26; 31; 40; 80) qui, lorsque le téton de couplage (21) a été inséré dans l'orifice (11; 79) de la broche d'implant (10), exerce une force de serrage mutuelle sur ledit téton de couplage (21) et ladite broche (10).

2. Un dispositif selon la revendication 1, dans lequel l'orifice (11) est un orifice cylindrique (11) ayant de préférence une section circulaire et dans lequel le téton de couplage (21) est un téton de couplage cylindrique (21) ayant un contour s'adaptant étroitement au dit orifice.

3. Un dispositif selon la revendication 1 ou 2, dans lequel l'organe de serrage résilient (26) a la forme d'un ressort plat, s'étendant selon la direction longitudinale du téton de couplage (21) dans un renfoncement (25) dudit téton de couplage (21).

4. Un dispositif selon la revendication 1 ou 2, dans lequel l'organe de serrage résilient (31) a la forme d'un ressort annulaire elliptique disposé dans une rainure circonférentielle (30) du téton de couplage (21).

5. Un dispositif selon la revendication 1 ou 2, dans lequel l'organe de serrage résilient (40) a la forme d'un ressort annulaire semi-circulaire disposé dans une rainure circonférentielle (30) du téton de couplage (21).

6. Un dispositif selon l'une quelconque des revendications 3 à 5, dans lequel l'organe de serrage résilient (26; 31; 40) présente une section dont le contour possède une partie extérieure plate.

7. Un dispositif selon la revendication 1 ou 2, dans lequel la broche d'implant (10) comporte une bague de serrage (70; 170), ledit orifice (79) étant défini par la paroi interne de la bague de serrage (70; 170) et l'organe de serrage résilient (80) étant formé sur ladite bague de serrage (70; 170).

8. Un dispositif selon la revendication 7, dans lequel l'organe de serrage résilient (80) est formé par au moins une ailette, légèrement inclinée vers l'intérieur et définie par des rainures (71; 72; 73) de la bague de serrage (70).

9. Un dispositif selon la revendication 8, dans lequel deux ailettes (80), dirigées l'une vers l'autre, sont formées dans la bague de serrage (70).

10. Un dispositif selon l'une quelconque des revendications 7 à 9, dans lequel la bague de serrage (7) est montée par pression, dans un alésage (60) de la broche d'implant (10).

11. Un dispositif selon l'une quelconque des revendications 7 à 9, dans lequel la bague de serrage (170) est pourvue d'un pas de vis externe (171), la broche d'implant (10 ; 110) est pourvue d'un pas de vis interne (12), et la bague de serrage (170) est vissée dans la broche d'implant (10; 110), de préférence y est fixée au moyen d'un adhésif.

12. Un dispositif selon l'une quelconque des revendications précédentes, dans lequel sont montés des moyens d'assistance au positionnement (50).

13. Un dispositif selon la revendication 12, dans lequel les moyens d'assistance au positionnement (50) comprennent un élément de projection (51) formé sur le téton de couplage (21) et un renfoncement (52) dans la broche d'implant (10), lequel renfoncement (52) coopère avec ledit élément de projection (51).

14. Un dispositif selon la revendication 12, dans lequel les moyens d'assistance au positionnement (50) comprennent une pièce d'extension profilée (53 ; 56) formée sur le téton de couplage (21) et un renfoncement (54; 57) profilé correspondant, à l'extrémité (55) de la broche d'implant (10), lequel renfoncement (54; 57) coopère avec la dite pièce d'extension (53; 56).

15. Un dispositif selon une quelconque des revendications 7 à 11, dans lequel la bague de serrage (70; 170) comporte une extrémité (76) et dans lequel sont disposés des moyens d'assistance au positionnement (50), lesquels comprennent une pièce d'extension profilée (53; 56), formée sur le téton de couplage (21), et un orifice (77) formé dans la partie extrême (76) de la bague de serrage (70; 170), lequel orifice (77) présente un profil en correspondance.

16. Un dispositif selon la revendication 14 ou 15, dans lequel la pièce d'extension (56) présente une longueur telle que, après insertion du téton (21) dans la broche d'implant (10), la pièce d'extension (56) s'engage dans l'orifice (57; 77) correspondant, préalablement à l'entrée en action des moyens de serrage (26; 31; 40; 80).

17. Un dispositif selon l'une quelconque des revendications précédentes, dans lequel est disposée une rainure formant évent pour permettre à l'air de s'échapper lors de l'insertion du téton de couplage (21) de l'organe de support (20) dans la broche d'implant (10).

18. Un dispositif selon l'une quelconque des revendications précédentes, dans lequel le téton de couplage (21) a une forme conique et est défini par un cône (90) ayant un angle au sommet α préférablement de l'ordre de 0° à 5° et dans lequel l'orifice (11; 79) présente une conicité correspondante,

19. Une broche d'implant (10) d'un dispositif selon l'une quelconque des revendications 1 à 18, ladite broche d'implant (10) comportant un orifice (11; 79) dans lequel le téton de couplage (21) d'un organe support (20) s'adapte étroitement de sorte que le téton de couplage peut s'adapter par serrage, et comportant en outre une bague de serrage (70; 170), laquelle bague de serrage comprend des moyens formant ressort (80).

20. Une broche d'implant selon la revendication 19, dans laquelle est disposé un renfoncement profilé (54; 57; 77) destiné à recevoir une pièce d'extension profilée (53; 56) d'un organe support (20).

21. Un procédé pour modifier une broche d'implant classique (110) présentant un pas de vis interne (112), dans lequel une bague de serrage (170) comportant un pas de vis externe (171), un orifice légèrement conique ou cylindrique (79) et un organe de serrage résilient (80), est vissée dans ledit pas de vis interne (112) de la broche d'implant (110) et y est de préférence fixée par collage.

22. Une bague de serrage (70; 170) pour implant dentaire, destinée à être utilisée dans un procédé selon la revendication 21, ladite bague de serrage (70; 170) comprenant un pas de vis externe (171), un orifice légèrement conique ou cylindrique (79) et un organe de serrage résilient (80).

23. Une bague de serrage (70; 170) selon la revendication 22, disposé à une extrémité (76) présentant un orifice profilé (77).
